# EUROPÄISCHE PATENTSCHRIFT

(11) **EP 3 934 924 B1**
(45) Veröffentlichungstag und Bekanntmachung des Hinweises auf die Patenterteilung: **11.05.2022**
(21) Anmeldenummer: 21708154.6
(22) Anmeldetag: 18.02.2021
(51) Int. Cl.: B60H 1/00, B60H 1/24, B60H 1/34

(54) **VENTILVORRICHTUNG ZUM STEUERN VON ZUMINDEST ZWEI ÜBER EIN DACHHIMMELSYSTEM IN EINEN KRAFTFAHRZEUGINNENRAUM AUSZUGEBENDEN LUFTSTRÖMEN**
VALVE DEVICE FOR CONTROLLING AT LEAST TWO AIR FLOWS TO BE DELIVERED VIA A ROOF LINING SYSTEM INTO THE INTERIOR OF A MOTOR VEHICLE
DISPOSITIF DE VANNE POUR RÉGULER AU MOINS DEUX FLUX D'AIR À DISTRIBUER PAR L'INTERMÉDIAIRE D'UN SYSTÈME DE GARNITURE DE TOIT DANS L'HABITACLE D'UN VÉHICULE AUTOMOBILE

(30) Priorität: 30.03.2020 DE 102020108717
(43) Veröffentlichungstag der Anmeldung: 12.01.2022
(73) Patentinhaber: Kautex Textron GmbH & Co. KG, 53229 Bonn (DE)
(72) Erfinder: DAUB, Meinolf, 53340 Meckenheim (DE)
(74) Vertreter: Richly & Ritschel Patentanwälte PartG mbB
(86) Internationale Anmeldenummer: PCT/EP2021/053980
(87) Internationale Veröffentlichungsnummer: WO 2021/197706

(56) Entgegenhaltungen:
- EP-A2- 0 255 004
- WO-A1-2007/133486
- DE-A1-102014 106 307
- DE-B4- 10 362 300

## Beschreibung

Die vorliegende Erfindung betrifft eine Ventilvorrichtung für ein Dachhimmelsystem für Kraftfahrzeuge, wobei die Ventilvorrichtung zum Steuern von zumindest zwei über das Dachhimmelsystem an einen Kraftfahrzeuginnenraum auszugebenden Luftströmen ausgebildet ist.

Ferner betrifft die vorliegende Erfindung ein Dachhimmelsystem für Kraftfahrzeuge, mit einer solchen Ventilvorrichtung.

Kraftfahrzeuge weisen zur Klimatisierung eines Fahrgastinnenraumes häufig ein Klimagerät (auch als Klimaanlage bezeichnet) auf, das üblicherweise mit beispielsweise im Bereich des Armaturenbretts und/oder im Bereich eines Mitteltunnels (für Font-Fahrgäste) angeordneten Luftausströmungseinrichtungen fluidverbunden ist. Bei entsprechend ausgebildeten Kraftfahrzeugen wird folglich ein klimatisierter Luftstrom (temperaturangepasster und/oder luftfeuchtigkeitsangepasster Luftstrom) auf Fahrgäste im Fahrgastraum frontal ausgegeben.

Eine entsprechende frontale Ausgabe von klimatisierter Luft auf Fahrgäste kann von den Fahrgästen als unangenehm empfunden werden, da die ausgegebenen klimatisierten Luftströme beispielsweise direkt auf die Augen der Fahrgäste treffen können, was zu Irritationen der Augen führen kann. Ferner können solche Luftströme als unangenehm empfunden werden, da dem Luftstrom direkt exponierte Körperbereiche auskühlen können, was zu lokaler Auskühlung und damit einhergehenden Verspannungen der Muskulatur führen kann.

Um diesem Problem zu begegnen ist aus der DE 198 32 738 A1 ein Kraftfahrzeug bekannt, bei dem das Dach eines Fahrgastraumes eine Luftverteilerkammer aufweist, welche mit einer sich in Richtung der Flächenausdehnung des Daches flächig erstreckenden Luftaustrittswand an den Fahrgastraum angrenzt. Die Luftaustrittswand ist mit einer Vielzahl von feinverteilten Durchbrüchen versehen, durch welche die der Luftverteilerkammer zugeführte Luft mit flächenhaft ausgedehnten Luftfronten in den Fahrgastraum eintritt.

Das aus der DE 198 32 738 A1 bekannte Dachhimmelsystem ermöglicht eine gleichmäßigere Anströmung der Passagiere im Fahrgastraum. Jedoch kann der auf die Passagiere abgegebene Luftstrom weiterhin als unangenehm empfunden werden, insbesondere, wenn der Luftstrom eine gegenüber der Temperatur im Fahrgastraum stark abweichende Temperatur aufweist, d.h., wenn der Fahrgastraum stark aufgeheizt oder weit abgekühlt ist.

Die WO 2007/133486 A1 beschreibt eine Ventilvorrichtung für die Front- und Seitenscheiben Belüftung und Enteisung eines Kraftahrzeugs mit einem oder mehreren Luftpassagen und entsprechend zugehörigen Auslässen.

Die DE 10 2014 106 307 A1 beschreibt eine Ventilklappenbaugruppe eines Fahrzeugklimagerätes, welche über zwei Ventilklappen, die auf zwei Wellen montiert sind, verfügt.

Der vorliegenden Erfindung liegt die Aufgabe zugrunde, eine Ventilvorrichtung für ein Dachhimmelsystem für Kraftfahrzeuge zum Steuern von zumindest zwei über das Dachhimmelsystem an einen Kraftfahrzeuginnenraum auszugebenden Luftströmen bereitzustellen, die einen vereinfachten Aufbau aufweist und mittels der die in den Kraftfahrzeuginnenraum eingeleiteten Luftströme weniger Irritationen bei sich im Fahrgastraum befindlichen Passagieren hervorrufen.

Die der vorliegenden Erfindung zugrundeliegende Aufgabe wird durch eine Ventilvorrichtung für ein Dachhimmelsystem für Kraftfahrzeuge mit den Merkmalen des Anspruchs 1 gelöst. Vorteilhafte Ausgestaltungen der Ventilvorrichtung sind in den Ansprüchen 2-9 beschrieben.

Im Genaueren wird die der vorliegenden Erfindung zugrundeliegende Aufgabe durch eine Ventilvorrichtung für ein Dachhimmelsystem für Kraftfahrzeuge gelöst, wobei die Ventilvorrichtung zum Steuern von zumindest zwei über das Dachhimmelsystem an einen Kraftfahrzeuginnenraum auszugebenden Luftströmen ausgebildet ist und folgende Merkmale aufweist:
- die Ventilvorrichtung weist einen ersten Luftkanal, einen zweiten Luftkanal, ein in dem ersten Luftkanal angeordnetes erstes Strömungsstellglied und ein in dem zweiten Luftkanal angeordnetes zweites Strömungsstellglied auf;
- das erste Strömungsstellglied ist in eine erste Drehrichtung und in eine zweite Drehrichtung antreibbar und zwischen einer Offenstellung, in der ein Durchströmen des ersten Luftkanals ermöglicht ist, und einer Schließstellung, in der das erste Strömungsstellglied ein Durchströmen des ersten Luftkanals verhindert, um eine Achse des ersten Strömungsstellglieds verdrehbar;
- das zweite Strömungsstellglied ist bezüglich des ersten Strömungsstellglieds verdrehbar und zwischen einer Offenstellung, in der ein Durchströmen des zweiten Luftkanals ermöglicht ist, und einer Schließstellung, in der das zweite Strömungsstellglied ein Durchströmen des zweiten Luftkanals verhindert, um die Achse verdrehbar; und - das zweite Strömungsstellglied ist mittels des ersten Strömungsstellglieds in die erste Drehrichtung und/oder in die zweite Drehrichtung antreibbar.

Die erfindungsgemäße Ventilvorrichtung weist einen vereinfachten Aufbau auf und weist trotz des einfachen Aufbaus den Vorteil auf, dass die Ventilvorrichtung eine Steuerung der in den Fahrgastraum eingeleiteten Luftströme derart ermöglicht, dass diese Luftströme weniger Irritationen bei sich im Fahrgastraum befindlichen Passagieren hervorrufen.

Die Ventilvorrichtung weist vorzugsweise zumindest einen ersten Luftkanal auf, so dass die Ventilvorrichtung zwei oder mehr erste Luftkanäle aufweisen kann, in denen jeweils ein erstes Strömungsstellglied angeordnet ist.

Weiter vorzugsweise weist die Ventilvorrichtung zumindest einen zweiten Luftkanal auf, so dass die Ventilvorrichtung zwei oder mehr zweite Luftkanäle aufweisen kann, in denen jeweils ein zweites Strömungsstellglied angeordnet ist.

Somit weist die Ventilvorrichtung vorzugsweise folgende Merkmale auf:
- die Ventilvorrichtung weist zumindest einen ersten Luftkanal, zumindest einen zweiten Luftkanal, zumindest ein erstes Strömungsstellglied, das in dem zumindest einen ersten Luftkanal angeordnet ist, und zumindest ein zweites Strömungsstellglied, das in dem zumindest einen zweiten Luftkanal angeordnet ist;
- das zumindest eine erste Strömungsstellglied ist in eine erste Drehrichtung und in eine zweite Drehrichtung antreibbar und zwischen einer Offenstellung, in der ein Durchströmen des zumindest einen ersten Luftkanals ermöglicht ist, und einer Schließstellung, in der das zumindest eine erste Strömungsstellglied ein Durchströmen des zumindest einen ersten Luftkanals verhindert, um eine Achse des zumindest einen ersten Strömungsstellglieds verdrehbar;
- das zumindest eine zweite Strömungsstellglied ist bezüglich des zumindest einen ersten Strömungsstellglieds verdrehbar und zwischen einer Offenstellung, in der ein Durchströmen des zumindest einen zweiten Luftkanals ermöglicht ist, und einer Schließstellung, in der das zumindest eine zweite Strömungsstellglied ein Durchströmen des zumindest einen zweiten Luftkanals verhindert, um die Achse verdrehbar; und
- das zweite Strömungsstellglied ist mittels des ersten Strömungsstellglieds in die erste Drehrichtung und/oder in die zweite Drehrichtung antreibbar.

Vorzugsweise weist die Ventilvorrichtung zusätzlich folgende Merkmale auf:
- das zumindest eine erste Strömungsstellglied weist einen ersten Mitnehmer und einen zweiten Mitnehmer auf, die bezüglich der Achse einen Winkelabstand zueinander aufweisen;
- das zumindest eine zweite Strömungsstellglied weist einen Anschlag mit einer ersten Anschlagsfläche und einer dieser gegenüberliegenden zweiten Anschlagsfläche auf;
- der erste Mitnehmer ist mit der ersten Anschlagsfläche in Kontakt bringbar, so dass bei einer Drehung des zumindest einen ersten Strömungsstellglieds in der ersten Drehrichtung das zumindest eine zweite Strömungsstellglied mittels des zumindest einen ersten Strömungsstellglieds in die erste Drehrichtung angetrieben wird; und
- der zweite Mitnehmer ist mit der zweiten Anschlagsfläche in Kontakt bringbar, so dass bei einer Drehung des zumindest einen ersten Strömungsstellglieds in der zweiten Drehrichtung das zumindest eine zweite Strömungsstellglied mittels des zumindest einen ersten Strömungsstellglieds in die zweite Drehrichtung angetrieben wird.

Bei sämtlichen im Folgenden beschriebenen vorteilhaften Ausführungsformen der Ventilvorrichtungen und des Dachhimmelsystems kann die Ventilvorrichtung folglich vorzugsweise zumindest einen ersten Luftkanal, zumindest einen zweiten Luftkanal, zumindest ein erstes Strömungsstellglied, das in dem zumindest einen ersten Luftkanal angeordnet ist, und zumindest ein zweites Strömungsstellglied, das in dem zumindest einen zweiten Luftkanal angeordnet ist, aufweisen.

Die Steuerung der auszugebenden Luftströme ist vorzugsweise so zu verstehen, dass die Stärke der in den Kraftfahrzeuginnenraum auszugebenden Luftströme gesteuert wird.

Der Luftkanal kann auch als Luftführungskanal bezeichnet werden.

Der erste Luftkanal kann auch als Außenluftkanal bezeichnet werden. Der zweite Luftkanal kann auch als Zentralluftkanal bezeichnet werden.

Vorzugsweise ist die Achse der ersten und/oder zweiten Strömungsstellglieds als Längsachse des ersten und/oder zweiten Strömungsstellglieds ausgebildet.

Vorzugsweise verlaufen die Längsachse der Ventilvorrichtung und die Achse des zumindest einen ersten Strömungsstellglieds kollinear zueinander.

Vorzugsweise verlaufen die Längsachse der Ventilvorrichtung und die Achse des zweiten Strömungsstellglieds kollinear zueinander. Somit verlaufen vorzugsweise die Achsen des zumindest einen ersten Strömungsstellglieds und des zweiten Strömungsstellglieds kollinear zueinander.

Das erste Strömungsstellglied kann auch als erste Ventilklappe bezeichnet werden, und das zweite Strömungsstellglied kann auch als zweite Ventilklappe bezeichnet werden.

Sowohl das erste Strömungsstellglied als auch das zweite Strömungsstellglied sind jeweils zwischen einer Offenstellung und einer Schließstellung verdrehbar. In den jeweiligen Offenstellungen lassen die jeweiligen Strömungsstellglieder eine Luftströmung in einem Kanal, in dem diese angeordnet sind, zu. In den jeweiligen Schließstellungen lassen die jeweiligen Strömungsstellglieder eine Luftströmung in einem Kanal, in dem diese angeordnet sind, nicht zu. Die jeweiligen Strömungsstellglieder sind kontinuierlich zwischen deren jeweiligen Offenstellung und Schließstellung verstellbar.

Das Merkmal, gemäß dem das zweite Strömungsstellglied mittels des zumindest einen ersten Strömungsstellglieds antreibbar ist, kann auch so ausgedrückt werden, dass das zweite Strömungsstellglied mit dem zumindest einen ersten Strömungsstellglied bewegungsgekoppelt ist.

Die **erfindungsgemäße** Ventilvorrichtung weist folgende zusätzlichen Merkmale auf:
- das erste Strömungsstellglied weist einen ersten Mitnehmer und einen zweiten Mitnehmer auf, die bezüglich der Achse einen Winkelabstand zueinander aufweisen;
- das zweite Strömungsstellglied weist einen Anschlag mit einer ersten Anschlagsfläche und einer dieser gegenüberliegenden zweiten Anschlagsfläche auf;
- der erste Mitnehmer ist mit der ersten Anschlagsfläche in Kontakt bringbar, so dass bei einer Drehung des ersten Strömungsstellglieds in der ersten Drehrichtung das zweite Strömungsstellglied mittels des ersten Strömungsstellglieds in die erste Drehrichtung angetrieben wird; und
- der zweite Mitnehmer ist mit der zweiten Anschlagsfläche in Kontakt bringbar, so dass bei einer Drehung des ersten Strömungsstellglieds in der zweiten Drehrichtung das zweite Strömungsstellglied mittels des ersten Strömungsstellglieds in die zweite Drehrichtung angetrieben wird.

Die entsprechend ausgebildete Ventilvorrichtung weist einen besonders einfachen und kompakten Aufbau auf.

Der Winkelabstand des zweiten Mitnehmers zum ersten Mitnehmer beträgt bezüglich der Achse des ersten Strömungsstellglieds (die mit der Längssachse der Antriebswelle identisch ist) vorzugsweise 180°.

Sowohl der erste Mitnehmer als auch der zweite Mitnehmer sind vorzugsweise jeweils als Stift beliebiger Querschnittsgeometrie (beispielsweise runde oder quadratische oder rechteckförmige Querschnittsgeometrie) ausgebildet.

Vorzugsweise weist das erste Strömungsstellglied eine Antriebswelle auf, mittels der das erste Strömungsstellglied in die erste Drehrichtung und in die zweite Drehrichtung drehbar ist, und das zweite Strömungsstellglied weist eine Längsausnehmung auf, wobei die Antriebswelle in der Längsausnehmung drehbar gelagert angeordnet ist, so dass das erste Strömungsstellglied bezüglich des zweiten Strömungsstellglieds verdrehbar ist.

Die entsprechend ausgebildete Ventilvorrichtung ermöglicht einen konstruktiv einfachen und kompakten Aufbau mit einer geringen Anzahl von Bauteilen.

Eine Längsachse der Antriebswelle verläuft kollinear zu der Längsachse des zumindest einen ersten Strömungsstellglieds.

Eine Längsachse der Längsausnehmung verläuft kollinear zu der Längsachse des zweiten Strömungsstellglieds.

Die Längsausnehmung ist zu einer Seite des zweiten Strömungsstellglieds offen, so dass die Antriebswelle in die Längsausnehmung einführbar ist.

Die Längsachsen des ersten Strömungsstellglieds und des zweiten Strömungsstellglieds verlaufen vorzugsweise kollinear zueinander.

Alternativ zu dieser Ausgestaltung der Ventilvorrichtung kann diese auch so ausgebildet sein, dass die Antriebswelle eine Längsausnehmung aufweist, in der eine Achse/Welle des zweiten Strömungsstellglieds drehbar angeordnet ist, so dass das erste Strömungsstellglied bezüglich des zweiten Strömungsstellglieds verdrehbar ist.

Weiter vorzugsweise ist die Ventilvorrichtung derart ausgebildet, dass der Anschlag radial von der Längsausnehmung wegragt.

Die entsprechend ausgebildete Ventilvorrichtung weist einen konstruktiv einfachen Aufbau auf.

Vorzugsweise ist die Ventilvorrichtung derart ausgebildet, dass das zweite Strömungsstellglied eine Ringnut aufweist, die eine Zugangsöffnung der Längsausnehmung zumindest teilweise umschließt, wobei der Anschlag innerhalb der Ringnut angeordnet ist, und wobei der erste Mitnehmer und der zweite Mitnehmer in die Ringnut ragen.

Die entsprechend ausgebildete Ventilvorrichtung weist einen konstruktiv einfachen und besonders kompakten Aufbau auf. Ferner ist durch die Anordnung des ersten und zweiten Mitnehmers in der Ringnut eine sichere Führung der Mitnehmer und somit eine verbesserte Zuverlässigkeit der Ventilvorrichtung gegeben.

Vorzugsweise ist die Ventilvorrichtung derart ausgebildet, dass diese zumindest zwei erste Luftkanäle aufweist, in denen jeweils ein erstes Strömungsstellglied angeordnet ist, wobei die jeweiligen ersten Strömungsstellglieder zwangsgekoppelt sind, sodass die jeweiligen ersten Strömungsstellglieder in den jeweiligen ersten Luftkanälen identische Winkelpositionen aufweisen, und wobei der zweite Luftkanal zwischen den zwei ersten Luftkanälen angeordnet ist.

Folglich weisen die ersten Strömungsstellglieder stets eine gleiche Stellung auf, befinden sich beispielsweise jeweils in einer Schließstellung oder jeweils in einer Offenstellung oder befinden sich jeweils in einer Stellung zwischen Offenstellung und Schließstellung.

Durch eine entsprechende Ausgestaltung der Ventilvorrichtung wird eine Steuerung von in einen Fahrgastraum einzuleitenden und vorzugsweise klimatisierten Luftströmen auf eine Art ermöglicht, die den Klimatisierungskomfort für Insassen des Fahrgastraumes erheblich verbessert.

Weiter vorzugsweise ist die Ventilvorrichtung derart ausgebildet, dass die zwei ersten Strömungsstellglieder mittels einer formschlüssigen Verbindung, vorzugsweise mittels einer Nut-Zapfen-Verbindung miteinander zwangsgekoppelt sind.

Die entsprechend ausgebildete Ventilvorrichtung weist einen einfachen und kompakten Aufbau auf.

Vorzugsweise ist die Ventilvorrichtung derart ausgebildet, dass das zweite Strömungsstellglied zwei erste Rasteinrichtungen aufweist, die bezüglich der Achse des zweiten Strömungsstellglieds einen Winkelabstand zueinander aufweisen. Ferner weist die Ventilvorrichtung eine zweite Rasteinrichtung auf, die jeweils mit einer der ersten Rasteinrichtung in Eingriff bringbar ist, wobei das zweite Strömungsstellglied mittels der zwei ersten Rasteinrichtungen und der zweiten Rasteinrichtung in dessen Offenstellung und in dessen Schließstellung verrastbar ist.

Bei der entsprechend ausgebildeten Ventilvorrichtung kann das zweite Strömungsstellglied in dessen Offenstellung und dessen Schließstellung verrastet werden, so dass eine Zuverlässigkeit der gewünschten auszugebenden Luftverteilung verbessert ist.

Die ersten Rasteinrichtungen sind vorzugsweise als Rastausnehmungen in dem zweiten Strömungsstellglied ausgebildet. Die ersten Rasteinrichtungen weisen vorzugsweise einen Winkelabstand von 90° bezüglich der Längsachse des zweiten Strömungsstellglieds zueinander auf.

Die zweite Rasteinrichtung ist vorzugsweise als Rastvorsprung ausgebildet.

Die Rastung der jeweiligen ersten Rasteinrichtung mit der zweiten Rasteinrichtung sind reversibel, so dass die Rastung aufhebbar bzw. lösbar ist.

Vorzugsweise weisen die zwei ersten Rasteinrichtungen zu dem Anschlag jeweils einen Winkelabstand von 45° bezüglich der Längsachse des zweiten Strömungsstellglieds auf, wobei der Anschlag bezüglich der Längsachse des zweiten Strömungsstellglieds zwischen den zwei ersten Rasteinrichtungen angeordnet ist.

Die zweite Rasteinrichtung ist vorzugsweise in dem zweiten Luftkanal angeordnet.

Vorzugsweise ist die Ventilvorrichtung derart ausgebildet, dass diese eine Gehäuseunterschale und eine mit dieser verbindbare Gehäuseoberschale aufweist, wobei die Gehäuseunterschale Lagerschalen zum drehbaren Lagern des ersten Strömungsstellglieds und des zweiten Strömungsstellglieds aufweist, und/oder wobei die Gehäuseoberschale Lagerschalen zum drehbaren Lagern des ersten Strömungsstellglieds und des zweiten Strömungsstellglieds aufweist.

Der Zusammenbau der entsprechend ausgebildeten Ventilvorrichtung ist besonders einfach ermöglicht. Ferner sind die ersten und zweiten Strömungsstellglieder durch die Lagerschalen zuverlässig gelagert und geführt, so dass die entsprechend ausgebildete Ventilvorrichtung eine verbesserte Langzeitzuverlässigkeit aufweist.

Vorzugsweise ist die Ventilvorrichtung derart ausgebildet, dass diese eine Antriebseinrichtung zum Antreiben des ersten Strömungsstellglieds in die erste Drehrichtung und in die zweite Drehrichtung aufweist.

Die entsprechend ausgebildete Ventilvorrichtung weist den Vorteil auf, dass das mit der Ventilvorrichtung ausgestattete Dachhimmelsystem einen vereinfachten Aufbau aufweisen kann, da kein separates Antriebsgestänge in dem Dachhimmelsystem vorgesehen sein muss.

Weiter vorzugsweise ist die Ventilvorrichtung derart ausgebildet, dass die Antriebseinrichtung einen Elektromotor aufweist. Weiter vorzugsweise ist die Ventilvorrichtung derart ausgebildet, dass die Antriebseinrichtung ein Getriebe aufweist.

Die der vorliegenden Erfindung zugrundeliegende Aufgabe wird ferner durch ein Dachhimmelsystem für Kraftfahrzeuge mit den Merkmalen des Anspruchs 10 gelöst. Vorteilhafte Ausführungsformen des Dachhimmelsystems sind in den Ansprüchen 11-13 beschrieben.

Im Genaueren wird die der vorliegenden Erfindung zugrundeliegende Aufgabe durch ein Dachhimmelsystem für Kraftfahrzeuge gelöst, wobei das Dachhimmelsystem zumindest einen Luftzufuhranschluss zum Anschließen des Dachhimmelsystems an ein Klimagerät des Kraftfahrzeugs und zumindest eine Ausströmungseinrichtung aufweist, die mit dem zumindest einen Luftzufuhranschluss fluidverbunden ist. Das erfindungsgemäße Dachhimmelsystem ist durch folgende Merkmale gekennzeichnet:
- das Dachhimmelsystem weist zumindest eine wie oben beschriebene Ventilvorrichtung auf;
- jede Ausströmungseinrichtung weist einen Zentralausströmungsbereich und einen Randausströmungsbereich auf, die jeweils zumindest einen separaten Luftzufuhrkanal aufweisen;
- der erste Luftkanal der Ventilvorrichtung ist mit dem Luftzufuhrkanal des Randausströmungsbereichs fluidverbunden;
- der zweite Luftkanal der Ventilvorrichtung ist mit dem Luftzufuhrkanal des Zentralausströmungsbereichs fluidverbunden; und
- der Randausströmungsbereich umschließt den Zentralausströmungsbereich zumindest teilweise.

Somit ist das erste Strömungsstellglied dem Randausströmungsbereich zugeordnet, und das zweite Strömungsstellglied ist dem Zentralströmungsbereich zugeordnet.

Folglich ist das zumindest eine erste Strömungsstellglied in dem zumindest einen Luftzufuhrkanal des Randausströmungsbereichs angeordnet, und das zumindest eine zweite Strömungsstellglied ist in dem zumindest einen Luftzufuhrkanal des Zentralströmungsbereichs angeordnet.

Das erfindungsgemäße Dachhimmelsystem weist unter anderem den Vorteil auf, dass ein mit dem erfindungsgemäßen Dachhimmelsystem ausgestatteter Fahrgastinnenraum eines Kraftfahrzeugs effizient und im Wesentlichen zugfrei klimatisierbar ist, so dass bei sich im Fahrgastraum befindlichen Passagieren weniger Irritationen auftreten.

Aufgrund der zumindest teilweisen Umschließung des Zentralausströmungsbereiches durch den Randausströmungsbereich umschließt der aus dem Randausströmungsbereich austretende Luftstrom zumindest teilweise den aus dem Zentralausströmungsbereich austretenden Luftstrom. Der aus dem Randausströmungsbereich austretende Luftstrom umgibt dabei den aus dem Zentralausströmungsbereich austretenden Luftstrom in Form eines Kokons. Somit wird eine zielgenaue Beaufschlagung eines Passagiers mit einem aus dem Dachhimmelsystem austretenden Luftstroms erreicht. Über die jeweiligen den Zentralausströmungsbereich und dem Randausströmungsbereich zugeordneten Strömungsstellglieder lassen sich die aus dem Zentralausströmungsbereich und dem Randausströmungsbereich austretenden Luftströme unabhängig voneinander einstellen, so dass unterschiedliche Körperbereiche eines Passagiers unterschiedlich stark angeströmt werden können. Beispielsweise können sensible Körperbereiche eines Fahrgastes, so wie beispielsweise der Kopf des Fahrgastes, mit weniger Luftmassen beaufschlagt werden als andere Körperbereiche des Fahrgastes, so wie beispielsweise der Schulterbereich des Fahrgastes.

Ein weiterer Vorteil des erfindungsgemäßen Dachhimmelsystems ist dessen einfacher Aufbau, so dass das erfindungsgemäße Dachhimmelsystem kostengünstig herstellbar ist.

Ein nochmals weiterer Vorteil des erfindungsgemäßen Dachhimmelsystems ist dessen im Vergleich zu aus dem Stand der Technik bekannten Dachhimmelsystemen und Klimatisierungssystemen eine sehr viel verbesserte Eignung zur Wiederverwertung (Recyling). Denn aus dem Stand der Technik bekannte Dachhimmelsysteme weisen eine mehrlagige Sandwichstruktur auf, was eine Wiederverwertung der verwendeten Materialien erheblich erschwert.

Die zumindest eine Ausströmungseinrichtung ist mittels des zumindest einen Luftzufuhranschlusses mit dem Klimagerät des Kraftfahrzeugs fluidverbindbar. Die jeweiligen Ausströmungszonen sind dazu ausgebildet, zumindest einen, vorzugsweise zumindest zwei von einem Dachhimmel des Fahrgastraums in den Fahrgastraum gerichtete Luftströme auszugeben.

Der Zentralausströmungsbereich ist vorzugsweise als zumindest eine Austrittsöffnung des Dachhimmelsystems ausgebildet. Selbiges gilt für den Randausströmungsbereich, der ebenfalls als zumindest eine weitere Austrittsöffnung des Dachhimmelsystems ausgebildet ist.

Die Ausströmungseinrichtung kann auch als Luftausströmungseinrichtung bezeichnet werden. Vorzugsweise ist die zumindest eine Ausströmungseinrichtung als Vertikalausströmungseinrichtung ausgebildet, so dass die aus dem Zentralausströmungsbereich und aus dem Randausströmungsbereich austretenden Luftströme im Wesentlichen vertikal von dem Dachhimmel in den Fahrgastraum ausgegeben werden.

Das Dachhimmelsystem weist vorzugsweise mehr als eine Ausströmungseinrichtung auf. Vorzugsweise weist das Dachhimmelsystem zumindest zwei, weiter vorzugsweise zumindest drei und nochmals weiter vorzugsweis zumindest vier Ausströmungseinrichtungen auf. Weiter vorzugsweise weist das Dachhimmelsystem eine einer Fahrgastzahl entsprechende Anzahl von Ausströmungseinrichtungen auf. Die Ausströmungseinrichtungen sind weiter vorzugsweise zueinander baugleich ausgebildet. Weiter vorzugsweise weist das Dachhimmelsystem weitere zusätzliche Ausströmungseinrichtungen für die Windschutzscheibe und/oder für die Heckscheibe und/oder für die Seitenscheiben des Kraftfahrzeugs auf.

Das Dachhimmelsystem weist vorzugsweise zumindest zwei Luftzufuhranschlüsse auf. Weiter vorzugsweise ist eine erste Ausströmungseinrichtung mit einem ersten Luftzufuhranschluss fluidverbunden. Weiter vorzugsweise sind eine erste und eine zweite Ausströmungseinrichtung mit einem ersten Luftzufuhranschluss fluidverbunden. Weiter vorzugsweise sind eine erste und eine zweite Ausströmungseinrichtung mit einem ersten Luftzufuhranschluss und eine dritte und eine vierte Ausströmungseinrichtung mit einem zweiten Luftzufuhranschluss fluidverbunden.

Das Merkmal, gemäß dem der Randausströmungsbereich den Zentralausströmungsbereich zumindest teilweise umschließt, kann auch so ausgedrückt werden, dass bei einer Draufsicht auf die Ausströmungseinrichtung der Randausströmungsbereich den Zentralausströmungsbereich zu zumindest zwei, vorzugsweise zu zumindest drei Seiten hin begrenzt. Mit anderen Worten bedeutet dies, dass in Draufsicht auf die Ausströmungseinrichtung der Randausströmungsbereich den Zentralausströmungsbereich in einem Winkelbereich von mehr als 180°, beispielsweise 270° umschließt.

Vorzugsweise umschließt der Randausströmungsbereich den Zentralausströmungsbereich derart, dass eine geradlinig verlaufende erste Achse in einer ersten Erstreckungsrichtung der Ausströmungseinrichtung den Randausströmungsbereich zweimal und den Zentralausströmungsbereich einmal durchläuft, wobei eine zweite geradlinig verlaufende Achse, die senkrecht zu der ersten Achse verläuft, in einer zweiten Erstreckungsrichtung der Ausströmungseinrichtung, die senkrecht zu der ersten Erstreckungsrichtung der Ausströmungseinrichtung orientiert ist, den Randausströmungsbereich und den Zentralausströmungsbereich jeweils einmal durchläuft.

Weiter vorzugsweise ist der Randausströmungsbereich in Draufsicht auf den Randausströmungsbereich U-förmig oder V-förmig ausgebildet.

Vorzugsweise weist das Dachhimmelsystem folgende Merkmale auf:
- das Dachhimmelsystem weist eine der Anzahl der Ausströmungseinrichtungen entsprechende Anzahl von Heizeinrichtungen zum Aufwärmen eines von der jeweiligen Ausströmungseinrichtung auszugebenden Luftstroms auf;
- jede Heizeinrichtung ist zwischen dem zumindest einen Luftzufuhranschluss und einer der Heizeinrichtung zugeordneten Ausströmungseinrichtung angeordnet; und
- der Zentralausströmungsbereich und der Randausströmungsbereich der jeweiligen Ausströmungseinrichtungen sind über deren jeweilige Luftzufuhrkanäle mit der Heizeinrichtung, die der Ausströmungseinrichtung zugeordnet ist, fluidverbunden, wobei der Zentralausströmungsbereich und der Randausströmungsbereich der Heizeinrichtung, die der Ausströmungseinrichtung zugeordnet ist, nachgelagert sind.

Das entsprechend ausgebildete Dachhimmelsystem weist den Vorteil auf, dass das fahrzeugseitige Klimagerät lediglich einen Luftstrom mit einer Temperatur bereitstellen muss, wobei mittels der jeweiligen Heizeinrichtungen die von den jeweiligen Ausströmungseinrichtungen ausgegebenen Luftströme so aufgewärmt werden, dass voreingestellte Temperaturen im Fahrgastinnenraum in den unterschiedlichen sich unterhalb der jeweiligen Ausströmungseinrichtungen befindlichen Fahrzeugbereiche eingestellt und erreicht werden können.

Das Merkmal, gemäß dem die Ausströmungsbereiche (also der Zentralausströmungsbereich und der Randausströmungsbereich) der der Ausströmungseinrichtung zugeordneten Heizeinrichtung nachgelagert sind, ist so zu verstehen, dass die Ausströmungsbereiche bezüglich des Luftstroms der der Ausströmungseinrichtung zugeordneten Heizeinrichtung nachgelagert sind. Folglich durchläuft ein von dem Dachhimmelsystem ausgegebener Luftstrom folgenden Pfad: Klimagerät -> Luftzufuhranschluss -> Heizeinrichtung -> Ausströmungsbereich.

Die Heizeinrichtung bzw. die Heizeinrichtungen sind vorzugsweise als Durchströmungs-Heizeinrichtung bzw. Durchströmungs-Heizeinrichtungen ausgebildet. Hierzu weist eine jede Heizeinrichtung einen Durchgangskanal auf, durch den der zu erwerbende Luftstrom hindurchgeführt wird.

Weiter vorzugsweise ist das Dachhimmelsystem derart ausgebildet, dass die jeweiligen Strömungsstellglieder der Heizeinrichtung nachgelagert sind.

Folglich sind die jeweiligen Strömungsstellglieder der Heizeinrichtung nachgelagert, die der gleichen Ausströmungseinrichtung wie die Strömungsstellglieder zugeordnet ist.

Das entsprechend ausgebildete Dachhimmelsystem weist den Vorteil auf, dass die jeweiligen Heizeinrichtungen des Dachhimmelsystems gleichmäßiger von dem aufzuwärmenden Luftstrom durchströmt werden.

Vorzugsweise weist das Dachhimmelsystem folgende Merkmale auf:
- die Ventilvorrichtung des Dachhimmelsystems weist zumindest zwei erste Luftkanäle auf, in denen jeweils ein erstes Strömungsstellglied angeordnet ist;
- die jeweiligen ersten Strömungsstellglieder sind zwangsgekoppelt, so dass die jeweiligen ersten Strömungsstellglieder in den jeweiligen ersten Luftkanälen identische Winkelpositionen aufweisen;
- der zweite Luftkanal ist zwischen den zwei ersten Luftkanälen angeordnet;
- der Randausströmungsbereich der jeweiligen Ausströmungseinrichtungen weist zumindest zwei Randausströmungszonen auf, die jeweils einen separaten Luftzufuhrkanal aufweisen;
- jeder Luftzufuhrkanal der Randausströmungszonen ist jeweils mit einem separaten ersten Luftkanal der Ventilvorrichtung fluidverbunden; und
- die zumindest zwei Randausströmungszonen umschließen gemeinsam den Zentralausströmungsbereich zumindest teilweise.

Das entsprechend ausgebildete Dachhimmelsystem weist eine erhöhte Flexibilität hinsichtlich der geometrischen Ausgestaltung des Randausströmungsbereichs auf. Ein weiterer Vorteil des entsprechend ausgebildeten Dachhimmelsystems ist, dass der Randausströmungsbereich gleichmäßiger von dem auszugebenden Luftstrom durchströmt wird. Ferner weist das entsprechend ausgebildete Dachhimmelsystem den Vorteil auf, dass der Randausströmungsbereich vergrößert ausgestaltet sein kann.

Weiter vorzugsweise ist das Dachhimmelsystem derart ausgebildet, dass zumindest eine Ausströmungseinrichtung eine Trennwand aufweist, die zwischen den zumindest zwei Randausströmungszonen angeordnet ist, so dass die zumindest zwei Randausströmungszonen voneinander durch die Trennwand getrennt sind.

Die zumindest eine Ausströmungseinrichtung des entsprechend ausgebildeten Dachhimmelsystems ist folglich derart ausgebildet, dass ein in eine Randausströmungszone eingeleiteter Luftstrom nicht in die andere Randausströmungszone des Randausströmungsbereichs fließen kann. Die Trennwand grenzt dabei direkt an die zwei Randausströmungszonen.

Das entsprechend ausgebildete Dachhimmelsystem weist den Vorteil auf, dass etwaige Turbulenzen aus dem Randausströmungsbereich reduziert oder gar vermieden werden. Denn ohne eine entsprechende Trennwand zwischen den Randausströmungszonen würden die Luftströme der zwei Randausströmungszonen aufeinander treffen, was unweigerlich zu Verwirbelungen und entsprechenden Turbulenzen führt.

Die der vorliegenden Erfindung zugrundeliegende Aufgabe wird ferner durch ein Kraftfahrzeug mit einem Klimagerät zur Klimatisierung eines Fahrgastinnenraumes des Kraftfahrzeugs gelöst, das ein oben beschriebenes Dachhimmelsystem aufweist, wobei der zumindest eine Luftzufuhranschluss des Dachhimmelsystems an das Klimagerät angeschlossen ist, so dass von dem Klimagerät bereitgestellte Luft über die zumindest eine Ausströmungseinrichtung des Dachhimmelsystems in den Fahrgastraum des Kraftfahrzeugs einleitbar ist.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine perspektivische Darstellung eines erfindungsgemäßen Dachhimmelsystems, wobei das Dachhimmelsystem so dargestellt ist, dass eine einem Fahrgastraum abgewandte Seite des Dachhimmelsystems dargestellt ist;
- Figur 2:: eine perspektivische Darstellung der erfindungsgemäßen Ventilvorrichtung;
- Figur 3A:: eine perspektivische Darstellung einer Gehäuseunterschale der in Figur 1 dargestellten Ventilvorrichtung;
- Figur 3B:: eine perspektivische Darstellung einer Gehäuseoberschale der in Figur 1 dargestellten Ventilvorrichtung;
- Figur 4A:: eine perspektivische Darstellung eines ersten Strömungsstellglieds der in Figur 1 dargestellten Ventilvorrichtung;
- Figur 4B:: eine perspektivische Darstellung eines weiteren ersten Strömungsstellglieds der in Figur 1 dargestellten Ventilvorrichtung;
- Figur 4C:: eine perspektivische Darstellung eines zweiten Strömungsstellglieds der in Figur 1 dargestellten Ventilvorrichtung; und
- Figur 5A - 5F:: schematische Seitenansichten auf ein erstes Strömungsstellglied und mit diesem bewegungsgekoppeltes zweites Strömungsstellglied der in Figur 1 dargestellten Ventilvorrichtung in verschiedenen Winkelpositionen der ersten und zweiten Strömungsstellgliedern.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

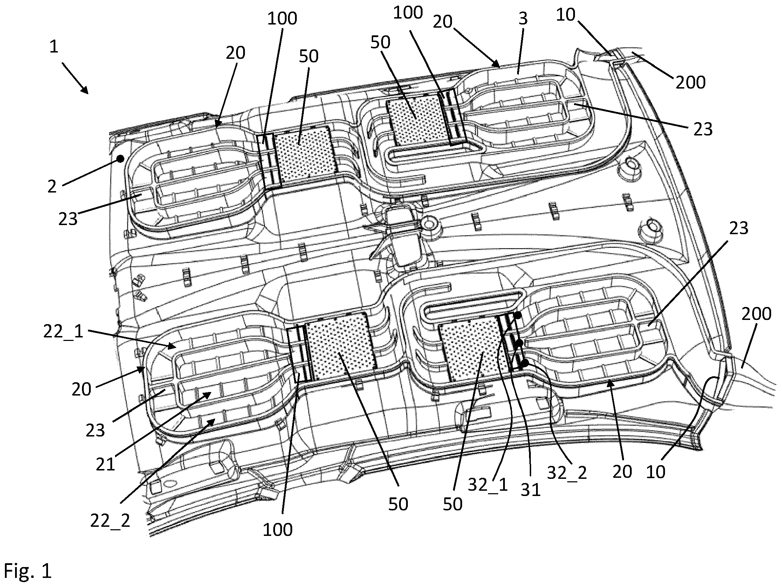

In Figur 1 ist ein erfindungsgemäßes Dachhimmelsystem 1 dargestellt. Dabei zeigt Figur 1 eine einem Fahrgastraum abgewandte Seite des Dachhimmelsystems 1.

Das erfindungsgemäße Dachhimmelsystem 1 weist in dem dargestellten Ausführungsbeispiel zwei Luftzufuhranschlüsse 10 auf, die jeweils mit einem Klimagerätkanal 200 fluidverbunden sind, wobei die Klimagerätkanäle 200 mit zumindest einem Klimagerät, das auch als Klimaanlage bezeichnet wird, verbunden sind. Die Klimagerätkanäle 200 sind vorzugsweise in einer C-Säule oder in einer D-Säule eines Kraftfahrzeugs angeordnet.

Das Dachhimmelsystem 1 weist ferner zumindest eine Ausströmungseinrichtung 20 auf. In dem dargestellten Ausführungsbeispiel weist das Dachhimmelsystem 1 vier Ausströmungseinrichtungen 20 auf, wobei die in Figur 1 links dargestellten Ausströmungseinrichtungen 20 Frontpassagieren des Kraftfahrzeugs zugeordnet sind, und wobei die in Figur 1 rechts dargestellten Ausströmungseinrichtungen 20 Heckpassagieren eines Kraftfahrzeugs zugeordnet sind.

Die jeweiligen Ausströmungseinrichtungen 20 sind an der dem Fahrgastraum abgewandten Seite des Dachhimmelsystems 1 durch eine in den Figuren nicht dargestellte Abdeckung verschlossen.

Wie aus Figur 1 ersichtlich ist, weist jede Ausströmungseinrichtung 20 einen Zentralausströmungsbereich 21 und einen Randausströmungsbereich 22_1, 22_2 auf, wobei der Zentralausströmungsbereich 21 einen separaten Luftzufuhrkanal 31 und der Randausströmungsbereich 22_1, 22_2 in dem dargestellten Ausführungsbeispiel zwei separate Luftzufuhrkanäle 32_1, 32_2 aufweist.

Das Dachhimmelsystem 1 weist einen Grundkörper 2 auf, wobei die jeweiligen Luftzufuhrkanäle 31, 32_1, 32_2 durch sich von dem Grundkörper 2 weg erstreckende Wände 3 zumindest teilweise gebildet sind. Im Genaueren sind die jeweiligen Luftzufuhrkanäle 31, 32_1, 32_2 durch die sich von dem Grundkörper 2 weg erstreckende Wände 3 und durch in der Figur nicht dargestellte Wände der Abdeckung gebildet, wobei der Verlauf der Wände der Abdeckung dem Verlauf der Wände 3 des Grundkörpers entspricht, und wobei die Wände der Abdeckung im montierten Zustand der Abdeckung mit dem Grundkörper 2 mit den Wänden 3 in direkten Kontakt stehen.

Die Ausströmungseinrichtungen 20 sind als Durchgangsöffnungen 20 des Grundkörpers 2 ausgebildet, wobei auf der dem Fahrgastraum zugewandten Seite des Grundkörpers 3 die Durchgangsöffnungen 20 mit Stabilisierungsstreben 25 versehen sind, sodass ein in den Figuren nicht dargestelltes Textil durch die entsprechenden Stabilisierungsstreben 25 verbessert abgestützt ist.

Wie aus Figur 1 ersichtlich ist, sind sowohl der Zentralausströmungsbereich 21 als auch der Randausströmungsbereich 22_1, 22_2 durch die sich von dem Grundkörper 2 weg erstreckende Wände 3 zumindest teilweise gebildet. Es ist ferner ersichtlich, dass der Grundkörper 2 und die Wände 3 einstückig ausgebildet sind, sodass das entsprechende Dachhimmelsystem 1 mit einem einzigen Formwerkzeug herstellbar ist, was zu einer Reduzierung der Herstellungskosten des Dachhimmelsystems 1 führt. Sowohl der Grundkörper 2 als auch die Wände 3 sind vorzugsweise aus expandiertem Polypropylen gebildet. Expandiertes Polypropylen weist hervorragende Dämpfungseigenschaften auf. Darüber hinaus bietet ein entsprechend ausgebildetes Dachhimmelsystems 1 einen guten Schutz im Falle eines Unfalls für beispielsweise den Kopf eines Insassen des Kraftfahrzeugs. Ein weiterer Vorteil des entsprechend ausgebildeten Dachhimmelsystems ist dessen geringes Gewicht.

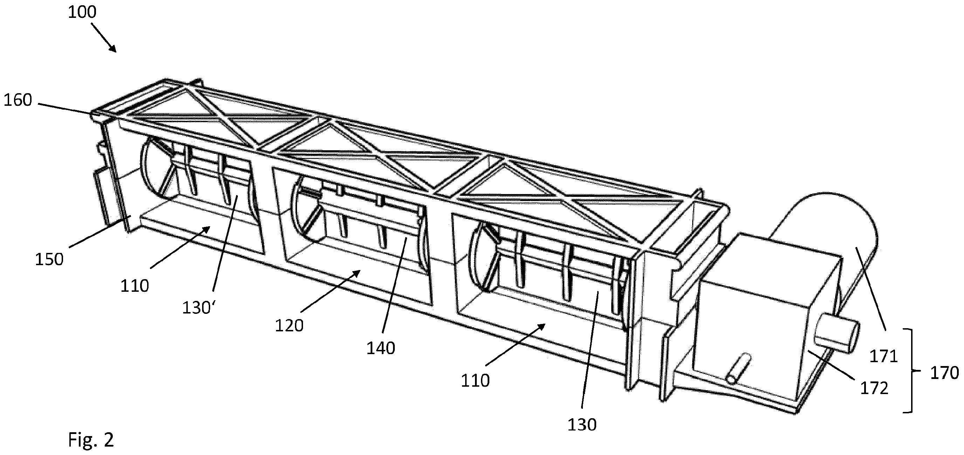

Wie aus Figur 1 ersichtlich ist, ist jeder Ausströmungseinrichtung 20 eine Ventilvorrichtung 100 zugeordnet, die stromaufwärts der jeweiligen Ausströmungseinrichtungen 20 angeordnet sind. Die Ventilvorrichtungen 100 werden weiter unten mit Bezug auf die Figuren 2 bis 5F näher beschrieben und dienen einer Steuerung der Luftströme in die jeweiligen Ausströmungseinrichtungen 20.

Figur 1 ist zu entnehmen, dass der Randausströmungsbereich 22_1, 22_2 den Zentralausströmungsbereich 21 zumindest teilweise umschließt. Bei dem dargestellten Ausführungsbeispiel umschließt der Randausströmungsbereich 22_1, 22_2 den Zentralausströmungsbereich 21 in einem Winkelbereich von 270°. Die vorliegende Erfindung ist jedoch auf eine entsprechende Umschließung des Zentralausströmungsbereichs 21 durch den Randausströmungsbereich 22_1, 22_2 nicht beschränkt, denn die Umschließung des Zentralausströmungsbereichs 21 durch den Randausströmungsbereich 22_1, 22_2 kann vorzugsweise in einem Winkelbereich zwischen 180° und 360° erfolgen. In dem dargestellten Ausführungsbeispiel umschließt der Randausströmungsbereich 22_1, 22_2 den Zentralausströmungsbereich 21 U-förmig.

Aus Figur 1 ist ersichtlich, dass das Dachhimmelsystem 1 eine der Anzahl der Ausströmungseinrichtungen 20 entsprechende Anzahl von Heizeinrichtungen 50 zum Aufwärmen eines von der jeweiligen Ausströmungseinrichtung 20 auszugebenden Luftstroms aufweist. In dem dargestellten Ausführungsbeispiel weist das Dachhimmelsystem 1 folglich vier Heizeinrichtungen 50 auf, die beispielsweise als Durchströmungs-Heizeinrichtungen 50 ausgebildet sind, sodass durch die Heizeinrichtung 50 hindurchströmende Luft mittels der die Heizeinrichtung 50 aufgeheizt wird.

Die zwei Heizeinrichtungen 50, die in Figur 1 im oberen Bereich des Dachhimmelsystems angeordnet sind, sind zwischen dem in Figur 1 oben dargestellten Luftzufuhranschluss 10 und jeweils einer der jeweiligen Heizeinrichtung 50 zugeordneten Ausströmungseinrichtung 20 angeordnet. Die zwei in Figur 1 unten dargestellten Heizeinrichtungen 50 sind zwischen dem in Figur 1 unten dargestellten Luftzufuhranschluss 10 und den jeweiligen Heizeinrichtungen 50 zugeordneten Ausströmungseinrichtungen 20 angeordnet.

Sowohl der Zentralausströmungsbereich 21 als auch der Randausströmungsbereich 22_1, 22_2 der jeweiligen Ausströmungseinrichtungen 20 sind über deren jeweilige Luftzufuhrkanäle 31, 32_1, 32_2 jeweils mit einer Heizeinrichtung 50, die der Ausströmungseinrichtung 20 zugeordnet ist, fluidverbunden. Dabei sind sowohl der Zentralausströmungsbereich 21 als auch der Randausströmungsbereich 22_1, 22_2 der Heizeinrichtung 50, die der Ausströmungseinrichtung 20 zugeordnet ist, nachgelagert. Der Figur 1 ist ferner zu entnehmen, dass die jeweiligen Ventilvorrichtungen 100 jeweils einer Heizeinrichtung 50 nachgelagert sind.

Aus Figur 1 ist ferner ersichtlich, dass die jeweiligen Randausströmungsbereiche 22_1, 22_2 der jeweiligen Ausströmungseinrichtungen 20 jeweils zumindest zwei Randausströmungszonen 22_1, 22_2 aufweisen, die jeweils einen separaten Luftzufuhrkanal 32_1, 32_2 aufweisen. Dabei umschließen die zumindest zwei Randausströmungszonen 22_1, 22_2 gemeinsam den Zentralausströmungsbereich 21 zumindest teilweise, im dargestellten Ausführungsbeispiel in einem Winkelbereich von 270°. Wie Figur 1 zu entnehmen ist, weist jede Ausströmungseinrichtung 20 jeweils eine Trennwand 23 auf, die zwischen den zwei Randausströmungszonen 22_1, 22_2 angeordnet ist, sodass die zumindest zwei Randausströmungszonen 22_1, 22_2 voneinander durch die Trennwand 23 getrennt sind. Hierdurch wird eine Verminderung einer Wirbelbildung unterhalb des Randausströmungsbereichs 22_1, 22_2 erreicht.

Figur 2 zeigt eine perspektivische Darstellung einer Ventilvorrichtung 100, von denen vier in dem in Figur 1 dargestellten Dachhimmelsystem 1 jeweils stromabwärts der jeweiligen Heizeinrichtungen 50 und jeweils stromaufwärts der jeweiligen Ausströmungseinrichtungen 20 angeordnet sind.

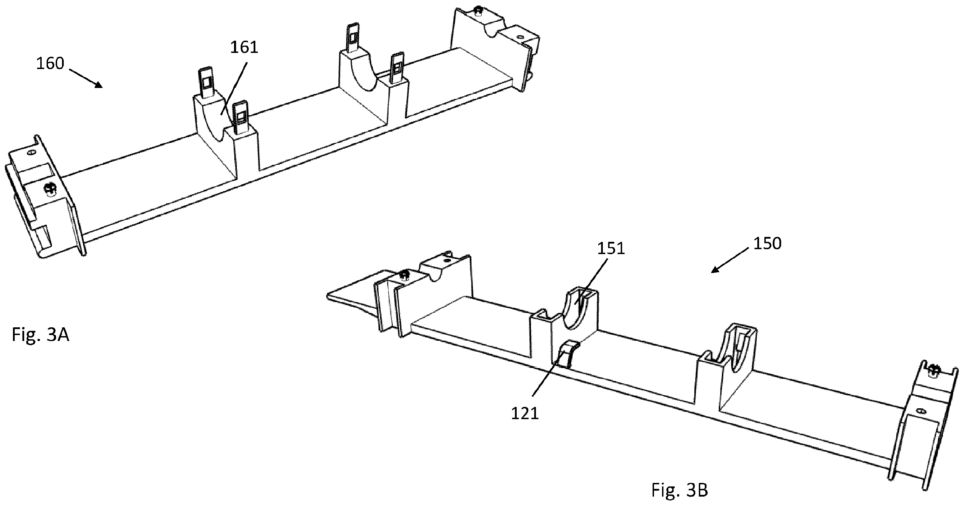

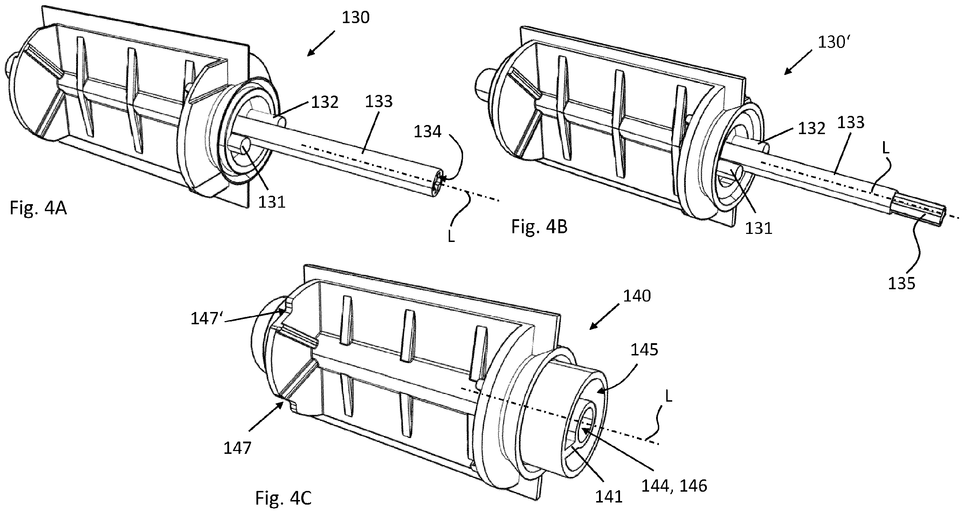

Die Ventilvorrichtung 100 weist eine in Figur 3B dargestellte Gehäuseunterschale 150 und eine mit dieser verbindbare und in Figur 3A dargestellte Gehäuseoberschale 160 auf. Wie aus Figur 3B ersichtlich ist, weist die Gehäuseunterschale 150 mehrere Lagerschalen 151 zum drehbaren Lagern von ersten Strömungsstellgliedern 130, 130' und eines zweiten Strömungsstellglieds 140 auf. Die ersten Strömungsstellglieder 130, 130' sind in Alleinstellung in den Figuren 4A und 4B dargestellt, und das zweite Strömungsstellglied ist in Alleinstellung in Figur 4C dargestellt. Die Gehäuseoberschale 160 weist ebenfalls Lagerschalen 161 zum drehbaren Lagern der ersten Strömungsstellglieder 130, 130' und des zweiten Strömungsstellglieds 140 auf.

Im zusammengebauten Zustand der Gehäuseunterschale 150 mit der Gehäuseoberschale 160 bildet das so gebildete Gehäuse drei Luftkanäle 110, 120. Bei der in Figur 1 dargestellten Ventilvorrichtung sind die zwei äußeren Luftkanäle die ersten Luftkanäle 110, und der zwischen den zwei ersten Luftkanälen 110 angeordnete Luftkanal ist der zweite Luftkanal 120. In den jeweiligen ersten Luftkanälen 110 ist jeweils ein erstes Strömungsstellglied 130, 130' angeordnet, und in dem zweiten Luftkanal 120 ist das zweite Strömungsstellglied 140 angeordnet.

Somit sind jeder Ausströmungseinrichtung 20 des Dachhimmelsystems 1 drei Strömungsstellglieder 130, 130' und 140 zugeordnet. Dabei ist das zweite Strömungsstellglied 140 dem Zentralausströmungsbereich 21 zugeordnet, und die zumindest zwei ersten Strömungsstellglieder 130, 130' sind dem Randausströmungsbereich 22_1, 22_2 zugeordnet.

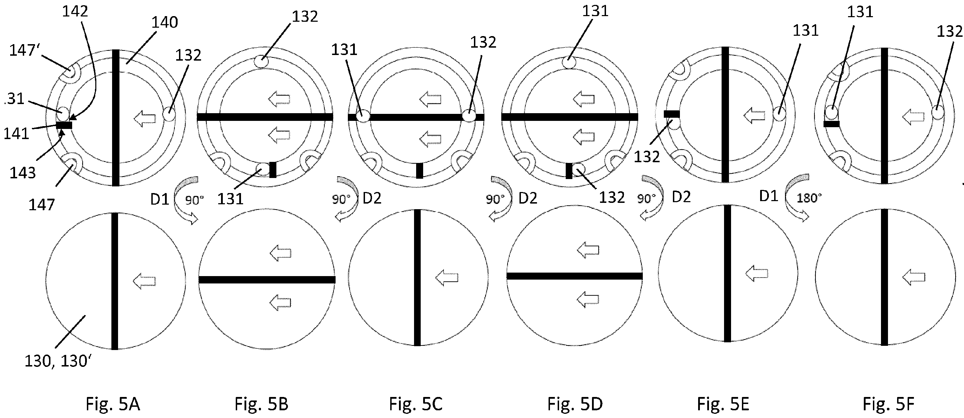

Wie aus den Figuren 4A und 4B ersichtlich ist, weisen die jeweiligen ersten Strömungsstellglieder 130, 130' jeweils eine Antriebswelle 133 auf, die sich entlang einer Längsachse L der ersten Strömungsstellglieder 130, 130' erstreckt. Die jeweiligen ersten Strömungsstellglieder 130, 130' sind mittels der Antriebswelle 133 antreibbar und in eine erste Drehrichtung D1 und in eine zweite Drehrichtung D2 drehbar antreibbar, wobei die zweite Drehrichtung D2 der ersten Drehrichtung D1 entgegengesetzt ist. Die erste Drehrichtung D1 und die zweite Drehrichtung D2 werden weiter unten mit Bezug auf die Figuren 5A bis 5F näher erläutert.

Das in Figur 4A dargestellte erste Strömungsstellglied 130 weist am freien Ende von dessen Antriebswelle 133 eine Buchse 134 auf, und die Antriebswelle 133 des in Figur 4B dargestellten ersten Strömungsstellglied 130' weist an dessen freien Ende einen Zapfen 135 auf. Die Querschnittsgeometrie der Buchse 134 und des Zapfens 135 entsprechen einander, sodass durch Ineinanderstecken des Zapfens 135 in die Buchse 134 die zwei ersten Strömungsstellglieder 130 und 130' mittels einer formschlüssigen Verbindung miteinander zwangsgekoppelt sind, sodass die ersten Strömungsstellglieder 130, 130' in den jeweiligen ersten Luftkanälen 110 jeweils identische Winkelpositionen aufweisen.

Wie aus Figur 4C ersichtlich ist, weist das zweite Strömungsstellglied 140 eine Längsausnehmung 144 auf, die über eine Zugangsöffnung 146 zugänglich ist. Die jeweiligen Antriebswellen 133 der ersten Strömungsstellglieder 130, 130' sind in die Längsausnehmung 144 einführbar, so dass die jeweiligen Antriebswellen 133 folglich in der Längsausnehmung 144 drehbar gelagert sind, wodurch die ersten Strömungsstellglieder 130, 130' bezüglich des zweiten Strömungsstellglieds 140 verdrehbar sind.

Die jeweiligen ersten Strömungsstellglieder 130, 130' weisen jeweils einen ersten Mitnehmer 131 und einen zweiten Mitnehmer 132 auf. Der erste Mitnehmer 131 und der zweiten Mitnehmer 132 weisen bezüglich der Längsachse L einen Winkelabstand zueinander auf, der in dem dargestellten Ausführungsbeispiel 180° beträgt.

Das zweite Strömungsstellglied 140 wiederum weist einen Anschlag 141 auf, wobei der Anschlag 141 eine erste Anschlagsfläche 142 und eine dieser gegenüberliegenden zweiten Anschlagsfläche 143 aufweist.

Im zusammengebauten Zustand der Ventilvorrichtung 100 ragen die jeweiligen ersten Mitnehmer 131 und zweiten Mitnehmer 132 in Ringnuten 145 des zweiten Strömungsstellglieds 140 hinein. Die jeweiligen Ringnuten 145 umschließen die Zugangsöffnungen 146. In dem dargestellten Ausführungsbeispiel ist der Anschlag 141 innerhalb der Ringnut 145 angeordnet und erstreckt sich radial von der Längsausnehmung 144 weg.

Aus Figur 1 ist ersichtlich, dass die erfindungsgemäße Ventilvorrichtung 100 eine Antriebseinrichtung 170 aufweist, die im dargestellten Ausführungsbeispiel einen Elektromotor 171 und ein Getriebe 172 aufweist, wobei das Getriebe 172 mit einer Antriebswelle 133 eines ersten Strömungsstellglieds 130 bewegungsgekoppelt ist. Die Antriebseinrichtung 170 ist dazu ausgebildet, das erste Strömungsstellglied 130 in die erste Drehrichtung D1 und in die zweite Drehrichtung D2 anzutreiben.

Das erste Strömungsstellglied 130 und somit auch das andere erste Strömungsstellglied 130' ist in die erste Drehrichtung D1 und in die zweite die Drehrichtung D2 antreibbar und zwischen einer Offenstellung, in der ein Durchströmen der jeweiligen ersten Luftkanäle 110 ermöglicht ist, und einer Schließstellung, in der die jeweiligen ersten Strömungsstellglieder 130, 130' ein Durchströmen der ersten Luftkanäle 110 verhindern, um die Längsachse L des ersten Strömungsstellglieder 130, 130' verdrehbar. Das zweite Strömungsstellglied 140 wiederum ist bezüglich der ersten Strömungsstellglieder 130, 130' wie bereits oben beschrieben verdrehbar und ebenfalls zwischen einer Offenstellung, in der ein Durchströmen des zweiten Luftkanals 120 ermöglicht ist, und einer Schließstellung, in der das zweite Strömungsstellglied 140 ein Durchströmen des zweiten Luftkanals verhindert, um die Längsachse L verdrehbar.

Im Folgenden wird mit Bezug auf die Figuren 5A bis 5F die Funktionsweise der Ventilvorrichtung 100 genauer erläutert. In den jeweiligen Figuren 5A bis 5F ist in den jeweiligen oberen Bereichen der Figuren das zweite Strömungsstellglied 140 im Querschnitt dargestellt, und in den jeweiligen unteren Bereichen der Figuren 5A bis 5F ist ein erstes Strömungsstellglied 130, 130' ebenfalls im Querschnitt dargestellt. Es ist darauf zu achten, dass in den jeweiligen oberen Bereichen der Figuren 5 A bis 5F die ersten Mitnehmer 131 und zweiten Mitnehmer 132 der jeweiligen ersten Strömungsstellglieder 130, 130' im Bereich des zweiten Strömungsstellglieds 140 dargestellt sind, sodass ein Wechselwirken des ersten Mitnehmers 131 und des zweiten Mitnehmers 132 mit dem Anschlag 141 verbessert veranschaulicht werden kann.

Bei einer in Figur 5A dargestellten Ausgangsposition befinden sich die ersten Strömungsstellglieder 130, 130' und das zweite Strömungsstellglied 140 jeweils in deren Schließstellung. Der erste Mitnehmer 131 liegt an einer ersten Anschlagsfläche 142 des Anschlags 141 an.

Aus den Figuren 5A bis 5F ist ferner ersichtlich, dass das zweite Strömungsstellglied 140 zwei erste Rasteinrichtungen 147, 147' aufweist. Die jeweiligen ersten Rasteinrichtungen 147, 147' sind auch in Figur 4C dargestellt und als Auskerbungen des zweiten Strömungsstellglieds 140 ausgebildet. Die Ventilvorrichtung 100 wiederum weist eine zweite Rasteinrichtung 121 in Form eines Rasthakens 121 auf, die in Figur 3B dargestellt ist. Die zweite Rasteinrichtung 121 ist mit jeder der ersten Rasteinrichtungen 147, 147' im Eingriff bringbar, sodass das zweite Strömungsstellglied 140 mittels der zwei ersten Rasteinrichtungen 147, 147' und mittels der zweiten Rasteinrichtung 121 entweder in dessen Offenstellung oder in dessen Schließstellung verrastbar ist.

Wie aus Figur 5A ersichtlich ist, befindet sich die erste Rasteinrichtung 147 in Eingriff mit der zweiten Rasteinrichtung 121.

Durch Antreiben des ersten Strömungsstellglieds 130 in die erste Drehrichtung D1 und Drehen um 90°, die bei der Darstellung in den Figuren 5A bis 5F entgegen des Uhrzeigersinns orientiert ist, werden die ersten Strömungsstellglied 130, 130' in deren Offenstellung überführt. Da der erste Mitnehmer 131 an der ersten Anschlagsfläche 142 des Anschlags 141 anliegt, treibt das erste Strömungsstellglied 130, 130' das zweite Strömungsstellglied 140 ebenfalls in die erste Drehrichtung D1 an, sodass durch Drehen des ersten Strömungsstellglieds 130, 130' das zweite Strömungsstellglied 140 ebenfalls in dessen Offenstellung überführt wird. Dieser Zustand der Ventilvorrichtung 100 ist in Figur 5B dargestellt. Es ist ersichtlich, dass auch in Offenstellung des zweiten Strömungsstellglieds 140 dieses verrastet ist, indem die erste Rasteinrichtung 147' mit der zweiten Rasteinrichtung 121 in Eingriff kommt.

Durch Antreiben des ersten Strömungsstellglieds 130, 130' aus der in Figur 5B dargestellten Winkelposition in zweite Drehrichtung D2 um 90° werden die ersten Strömungsstellglieder 130, 130' wieder in deren Schließstellung überführt. Aufgrund der drehbaren Lagerung des zweiten Strömungsstellglieds 140 gegenüber den ersten Strömungsstellgliedern 130, 130' verbleibt das zweite Strömungsstellglied 140 in dessen Offenstellung. Dieser Zustand der Ventilvorrichtung 100, in dem die ersten Strömungsstellglieder 130, 130' sich in deren Schließstellung und das zweite Strömungsstellglied 140 sich in dessen Offenstellung befindet, ist in Figur 5C dargestellt.

Durch nochmaliges Antreiben des ersten Strömungsstellglieds 130, 130' wieder in zweite Drehrichtung um 90° werden die ersten Strömungsstellglieder 130, 130' wieder in deren Offenstellung überführt, und der zweite Mitnehmer 132 kommt in Kontakt mit der zweiten Anschlagsfläche 143 des Anschlags 141. Dieser Zustand, in dem sich die ersten Strömungsstellglieder 130, 130' in deren Offenstellung und auch das zweite Strömungsstellglied 140 sich in dessen Offenstellung befindet, ist in Figur 5D dargestellt, wobei in diesem Zustand der Ventilvorrichtung 100 der zweite Mitnehmer 132 an der zweiten Anschlagsfläche 143 des Anschlags 141 anliegt.

Durch nochmaliges Antreiben der ersten Strömungsstellglieder 130, 130' in die zweite Drehrichtung wiederum um 90° werden die zwei ersten Strömungsstellglieder 130, 130' wieder in deren Schließstellung überführt. Aufgrund des Anliegens des zweiten Mitnehmers 132 an der zweiten Anschlagsfläche 143 des Anschlags 141 treiben die ersten Strömungsstellglieder 130, 130' das zweite Strömungsstellglied 140 ebenfalls in zweite Drehrichtung D2 an, sodass auch das zweite Strömungsstellglied 140 in dessen Schließstellung überführt wird. Dieser Zustand, in dem sich die ersten Strömungsstellglieder 130, 130' und auch das zweite Strömungsstellglied 140 jeweils in deren Schließstellung befinden, und in dem der zweite Mitnehmer 132 an der zweiten Anschlagsfläche 143 anliegt, ist in Figur 5E dargestellt.

Durch Antreiben der ersten Strömungsstellglieder 130, 130' um 180° in die erste Drehrichtung wird das System wieder in den in Figur 5A dargestellte Zustand überführt, der ebenfalls in Figur 5F dargestellt ist. In diesem Zustand befinden sich die ersten Strömungsstellglieder 130, 130' und auch das zweite Strömungsstellglied 140 jeweils in deren Schließstellung, und der erste Mitnehmer 131 liegt an der ersten Anschlagsfläche 142 des Anschlags 141 an.

### Bezugszeichenliste

- 1: Dachhimmelsystem
- 2: Grundkörper
- 3: Wände (des Dachhimmelsystems / des Grundkörpers)
- 10: Luftzufuhranschluss
- 20: Ausströmungseinrichtung, Durchgangsöffnung
- 21: Zentralausströmungsbereich
- 22_1: Randausströmungsbereich, erste Randausströmungszone
- 22_2: Randausströmungsbereich, zweite Randausströmungszone
- 23: Trennwand
- 24: Abdeckung (der Ausströmungseinrichtung)
- 25: Stabilisierungsstrebe
- 31: Luftzufuhrkanal (des Zentralausströmungsbereichs)
- 32: Luftzufuhrkanal (des Randausströmungsbereichs)
- 50: Heizeinrichtung
- 100: Ventilvorrichtung
- 110: erster Luftkanal
- 120: zweiter Luftkanal
- 121: zweite Rasteinrichtung (der Ventilvorrichtung)
- 130: erstes Strömungsstellglied
- 131: erster Mitnehmer (des ersten Strömungsstellglieds)
- 132: zweite Mitnehmer (des ersten Strömungsstellglieds)
- 133: Antriebswelle (des ersten Strömungsstellglieds)
- 134: Buchse (der Antriebswelle)
- 135: Zapfen (der Antriebswelle)
- 140: zweites Strömungsstellglied
- 141: Anschlag (des zweiten Strömungsstellglieds)
- 142: erste Anschlagsfläche
- 143: zweite Anschlagsfläche
- 144: Längsausnehmung (des zweiten Strömungsstellglieds)
- 145: Ringnut (des zweiten Strömungsstellglieds)
- 146: Zugangsöffnung (der Längsausnehmung)
- 147, 147': erste Rasteinrichtung (des zweiten Strömungsstellglieds)
- 150: Gehäuseunterschale
- 151: Lagerschale (der Gehäuseunterschale)
- 160: Gehäuseoberschale
- 161: Lagerschale (der Gehäuseoberschale)
- 170: Antriebseinrichtung (der Ventilvorrichtung)
- 171: Elektromotor (der Antriebseinrichtung)
- 172: Getriebe (der Antriebseinrichtung)
- 200: Klimagerätkanal
- D1: erste Drehrichtung
- D2: zweite Drehrichtung
- L: Achse / Längsachse (des ersten und zweiten Strömungsstellglieds)

## Patentansprüche

1. Ventilvorrichtung (100) für ein Dachhimmelsystem (1) für Kraftfahrzeuge, wobei die Ventilvorrichtung (100) zum Steuern von zumindest zwei über das Dachhimmelsystem (1) an einen Kraftfahrzeuginnenraum auszugebenden Luftströmen ausgebildet ist und wobei:
- die Ventilvorrichtung (100) einen ersten Luftkanal (110), einen zweiten Luftkanal (120), ein in dem ersten Luftkanal (110) angeordnetes erstes Strömungsstellglied (130, 130') und ein in dem zweiten Luftkanal (120) angeordnetes zweites Strömungsstellglied (140) aufweist;
- das erste Strömungsstellglied (130, 130') in eine erste Drehrichtung (D1) und in eine zweite Drehrichtung (D2) antreibbar und zwischen einer Offenstellung, in der ein Durchströmen des ersten Luftkanals (110) ermöglicht ist, und einer Schließstellung, in der das erste Strömungsstellglied (130, 130') ein Durchströmen des ersten Luftkanals (110) verhindert, um eine Achse (L) des ersten Strömungsstellglieds (130, 130') verdrehbar ist;
- das zweite Strömungsstellglied (140) bezüglich des ersten Strömungsstellglieds (130, 130') verdrehbar und zwischen einer Offenstellung, in der ein Durchströmen des zweiten Luftkanals (120) ermöglicht ist, und einer Schließstellung, in der das zweite Strömungsstellglied (140) ein Durchströmen des zweiten Luftkanals (120) verhindert, um die Achse (L) verdrehbar ist; und
- das zweite Strömungsstellglied (140) mittels des ersten Strömungsstellglieds (130, 130') in die erste Drehrichtung (D1) und/oder in die zweite Drehrichtung (D2) antreibbar ist,
wobei die Ventilvorrichtung (100) durch folgende Merkmale **gekennzeichnet** ist:
- das erste Strömungsstellglied (130, 130') weist einen ersten Mitnehmer (131) und einen zweiten Mitnehmer (132) auf, die bezüglich der Achse (L) einen Winkelabstand zueinander aufweisen;
- das zweite Strömungsstellglied (140) weist einen Anschlag (141) mit einer ersten Anschlagsfläche (142) und einer dieser gegenüberliegenden zweiten Anschlagsfläche (143) auf;
- der erste Mitnehmer (131) ist mit der ersten Anschlagsfläche (142) in Kontakt bringbar, so dass bei einer Drehung des ersten Strömungsstellglieds (130, 130') in der ersten Drehrichtung (D1) das zweite Strömungsstellglied (140) mittels des ersten Strömungsstellglieds (130, 130') in die erste Drehrichtung (D1) angetrieben wird; und
- der zweite Mitnehmer (132) ist mit der zweiten Anschlagsfläche (143) in Kontakt bringbar, so dass bei einer Drehung des ersten Strömungsstellglieds (130, 130') in der zweiten Drehrichtung (D2) das zweite Strömungsstellglied (140) mittels des ersten Strömungsstellglieds (130, 130') in die zweite Drehrichtung (D2) angetrieben wird.

2. Ventilvorrichtung (100) nach Anspruch 1, **gekennzeichnet durch** folgende Merkmale:
- das erste Strömungsstellglied (130, 130') weist eine Antriebswelle (133) auf, mittels der das erste Strömungsstellglied (130, 130') in die erste Drehrichtung (D1) und in die zweite Drehrichtung (D2) drehbar ist;
- das zweite Strömungsstellglied (140) weist eine Längsausnehmung (144) auf; und
- die Antriebswelle (133) ist in der Längsausnehmung (144) drehbar gelagert angeordnet, so dass das erste Strömungsstellglied (130, 130') bezüglich des zweiten Strömungsstellglieds (140) verdrehbar ist.

3. Ventilvorrichtung (100) nach Anspruch 2, **dadurch gekennzeichnet, dass** der Anschlag (141) radial von der Längsausnehmung (144) wegragt.

4. Ventilvorrichtung (100) nach einem der Ansprüche 2 oder 3, **gekennzeichnet durch** die folgenden Merkmale:
- das zweite Strömungsstellglied (140) weist eine Ringnut (145) auf, die eine Zugangsöffnung (146) der Längsausnehmung (144) zumindest teilweise umschließt;
- der Anschlag (141) ist innerhalb der Ringnut (145) angeordnet; und
- der erste Mitnehmer (131) und der zweite Mitnehmer (132) ragen in die Ringnut (145).

5. Ventilvorrichtung (100) nach einem der vorhergehenden Ansprüche, **gekennzeichnet durch** die folgenden Merkmale:
- die Ventilvorrichtung (100) weist zumindest zwei erste Luftkanäle (110) auf, in denen jeweils ein erstes Strömungsstellglied (130, 130') angeordnet ist;
- die jeweiligen ersten Strömungsstellglieder (130, 130') sind zwangsgekoppelt, so dass die jeweiligen ersten Strömungsstellglieder (130, 130') in den jeweiligen ersten Luftkanälen (110) identische Winkelpositionen aufweisen; und
- der zweite Luftkanal (120) ist zwischen den zwei ersten Luftkanälen (110) angeordnet.

6. Ventilvorrichtung (100) nach Anspruch 5, **dadurch gekennzeichnet, dass** die zwei ersten Strömungsstellglieder (130, 130') mittels einer formschlüssigen Verbindung, vorzugsweise mittels einer Buchse-Zapfen-Verbindung miteinander zwangsgekoppelt sind.

7. Ventilvorrichtung (100) nach einem der vorhergehenden Ansprüche, **gekennzeichnet durch** die folgenden Merkmale:
- das zweite Strömungsstellglied (140) weist zwei erste Rasteinrichtungen (147, 147') auf, die bezüglich der Achse (L) des zweiten Strömungsstellglieds (140) einen Winkelabstand zueinander aufweisen;
- die Ventilvorrichtung (100) weist eine zweite Rasteinrichtung (121) auf, die jeweils mit einer der ersten Rasteinrichtung (147, 147') in Eingriff bringbar ist;
- das zweite Strömungsstellglied (140) ist mittels der zwei ersten Rasteinrichtungen (147, 147') und der zweiten Rasteinrichtung (121) in dessen Offenstellung und in dessen Schließstellung verrastbar.

8. Ventilvorrichtung (100) nach einem der vorhergehenden Ansprüche, **gekennzeichnet durch** die folgenden Merkmale:
- die Ventilvorrichtung (100) weist eine Gehäuseunterschale (150) und eine mit dieser verbindbare Gehäuseoberschale (160) auf;
- die Gehäuseunterschale (150) weist Lagerschalen (151) zum drehbaren Lagern des ersten Strömungsstellglieds (130, 130') und des zweiten Strömungsstellglieds (140) auf; und/oder
- die Gehäuseoberschale (160) weist Lagerschalen (161) zum drehbaren Lagern des ersten Strömungsstellglieds (130, 130') und des zweiten Strömungsstellglieds (140) auf.

9. Ventilvorrichtung (100) nach einem der vorhergehenden Ansprüche, **dadurch gekennzeichnet, dass** die Ventilvorrichtung (100) eine Antriebseinrichtung (170, 171, 172) zum Antreiben des ersten Strömungsstellglieds (130, 130') in die erste Drehrichtung (D1) und in die zweite Drehrichtung (D2) aufweist.

10. Dachhimmelsystem (1) für Kraftfahrzeuge, umfassend:
- zumindest einen Luftzufuhranschluss (10) zum Anschließen des Dachhimmelsystems (1) an ein Klimagerät des Kraftfahrzeugs;
- zumindest eine Ausströmungseinrichtung (20), die mit dem zumindest einen Luftzufuhranschluss (10) fluidverbunden ist,
wobei das Dachhimmelsystem (1) durch folgende Merkmale **gekennzeichnet** ist:
- das Dachhimmelsystem (1) weist zumindest eine Ventilvorrichtung (100) nach einem der vorhergehenden Ansprüche auf;
- jede Ausströmungseinrichtung (20) weist einen Zentralausströmungsbereich (21) und einen Randausströmungsbereich (22_1, 22_2) auf, die jeweils zumindest einen separaten Luftzufuhrkanal (31, 32_1, 32_2) aufweisen;
- der erste Luftkanal (110) der Ventilvorrichtung (100) ist mit dem Luftzufuhrkanal (32_1, 32_2) des Randausströmungsbereichs (22_1, 22_2) fluidverbunden;
- der zweite Luftkanal (120) der Ventilvorrichtung (100) ist mit dem Luftzufuhrkanal (31) des Zentralausströmungsbereichs (21) fluidverbunden; und
- der Randausströmungsbereich (22_1, 22_2) umschließt den Zentralausströmungsbereich (21) zumindest teilweise.

11. Dachhimmelsystem (1) nach Anspruch 10, **gekennzeichnet durch** die folgenden Merkmale:
- das Dachhimmelsystem (1) weist eine der Anzahl der Ausströmungseinrichtungen (20) entsprechende Anzahl von Heizeinrichtungen (50) zum Aufwärmen eines von der jeweiligen Ausströmungseinrichtung (20) auszugebenden Luftstroms auf;
- jede Heizeinrichtung (50) ist zwischen dem zumindest einen Luftzufuhranschluss (10) und einer der Heizeinrichtung (50) zugeordneten Ausströmungseinrichtung (20) angeordnet; und
- der Zentralausströmungsbereich (21) und der Randausströmungsbereich (22_1, 22_2) der jeweiligen Ausströmungseinrichtungen (20) sind über deren jeweilige Luftzufuhrkanäle (31, 32_1, 32_2) mit der Heizeinrichtung (50), die der Ausströmungseinrichtung (20) zugeordnet ist, fluidverbunden, wobei der Zentralausströmungsbereich (21) und der Randausströmungsbereich (22_1, 22_2) der Heizeinrichtung (50), die der Ausströmungseinrichtung (20) zugeordnet ist, nachgelagert sind.

12. Dachhimmelsystem (1) nach Anspruch 11, **dadurch gekennzeichnet, dass** die jeweiligen Strömungsstellglieder (130, 130', 140) der Heizeinrichtung (50) nachgelagert sind.

13. Dachhimmelsystem (1) nach einem der Ansprüche 10 bis 12, **gekennzeichnet durch** die folgenden Merkmale:
- das Dachhimmelsystem weist eine Ventilvorrichtung nach Anspruch 5 auf;
- der Randausströmungsbereich (22_1, 22_2) der jeweiligen Ausströmungseinrichtungen (20) weist zumindest zwei Randausströmungszonen (22_1, 22_2) auf, die jeweils einen separaten Luftzufuhrkanal (32_1, 32_2) aufweisen;
- jeder Luftzufuhrkanal (32_1, 32_2) der Randausströmungszonen (22_1, 22 2) ist jeweils mit einem separaten ersten Luftkanal (110) der Ventilvorrichtung (100) fluidverbunden; und
- die zumindest zwei Randausströmungszonen (22_1, 22_2) umschließen gemeinsam den Zentralausströmungsbereich (21) zumindest teilweise.

14. Kraftfahrzeug mit einem Klimagerät zur Klimatisierung eines Fahrgastinnenraumes des Kraftfahrzeugs, wobei das Kraftfahrzeug **dadurch gekennzeichnet ist, dass** das Kraftfahrzeug ein Dachhimmelsystem (1) nach einem der Ansprüche 10 bis 13 aufweist, wobei der zumindest eine Luftzufuhranschluss (10) des Dachhimmelsystems (1) an das Klimagerät angeschlossen ist, so dass von dem Klimagerät bereitgestellte Luft über die zumindest eine Ausströmungseinrichtung (20) des Dachhimmelsystems (1) in den Fahrgastraum des Kraftfahrzeugs einleitbar ist.

## Claims

1. Valve device (100) for a roof lining system (1) for motor vehicles, the valve device (100) being designed for controlling at least two air flows to be emitted to a motor vehicle interior via the roof lining system (1), and wherein:
- the valve device (100) has a first air duct (110), a second air duct (120), a first flow actuator (130, 130') arranged in the first air duct (110) and a second flow actuator (140) arranged in the second air duct (120);
- said first flow actuator (130, 130') is drivable in a first direction of rotation (D1) and in a second direction of rotation (D2) and is rotatable about an axis (L) of the first flow actuator (130, 130') between an open position, in which flow through the first air duct (110) is enabled, and a closed position, in which the first flow actuator (130, 130') prevents flow through the first air duct (110);
- said second flow actuator (140) is rotatable with respect to said first flow actuator (130, 130') and is rotatable about said axis (L) between an open position, in which flow through said second air duct (120) is allowed, and a closed position, in which said second flow actuator (140) prevents flow through said second air duct (120); and
- the second flow actuator (140) is drivable by means of the first flow actuator (130, 130') in the first direction of rotation (D1) and/or in the second direction of rotation (D2),
the valve device (100) being **characterized by** the following features:
- the first flow actuator (130, 130') has a first tappet (131) and a second tappet (132) which are angularly spaced apart with respect to the axis (L);
- the second flow actuator (140) has an end stop (141) with a first end stop surface (142) and a second end stop surface (143) opposite thereto;
- the first tappet (131) is contactable with the first end stop surface (142), so that upon rotation of the first flow actuator (130, 130') in the first direction of rotation (D1), the second flow actuator (140) is driven in the first direction of rotation (D1) by means of the first flow actuator (130, 130'); and
- the second tappet (132) is contactable with the second end stop surface (143), so that upon rotation of the first flow actuator (130, 130') in the second direction of rotation (D2) the second flow actuator (140) is driven in the second direction of rotation (D2) by means of the first flow actuator (130, 130').

2. Valve device (100) according to claim 1, **characterized by** the following features:
- said first flow actuator (130, 130') has a drive shaft (133) by means of which the first flow actuator (130, 130') is rotatable in the first direction of rotation (D1) and in the second direction of rotation (D2);
- said second flow actuator (140) has a longitudinal recess (144); and
- said drive shaft (133) is rotatably mounted in the longitudinal recess (144) so that the first flow actuator (130, 130') is rotatable with respect to the second flow actuator (140) .

3. Valve device (100) according to claim 2, **characterized in that** the said stop (141) protrudes radially away from the longitudinal recess (144).

4. Valve device (100) according to one of claims 2 or 3, **characterized by** the following features:
- said second flow actuator (140) comprises an annular groove (145) at least partially surrounding an access opening (146) of the longitudinal recess (144);
- said end stop (141) is disposed within said annular groove (145); and
- said first tappet (131) and said second tappet (132) project into the annular groove (145).

5. Valve device (100) according to one of the preceding claims, **characterized by** the following features:
- said valve device (100) has at least two first air ducts (110), in each of which a first flow actuator (130, 130') is arranged;
- said respective first flow actuators (130, 130') are positively coupled so that the respective first flow actuators (130, 130') have identical angular positions in the respective first air ducts (110); and
- the second air duct (120) is arranged between the two first air ducts (110).

6. Valve device (100) according to claim 5, **characterized in that** said two first flow actuators (130, 130') are positively coupled to each other by means of a positive connection, preferably by means of a bushing-pin connection.

7. Valve device (100) according to one of the preceding claims, **characterized by** the following features:
- said second flow actuator (140) has two first latching means (147, 147') which are angularly spaced apart with respect to the axis (L) of the second flow actuator (140);
- said valve device (100) comprises a second latching means (121), which is engageable with one of the first latching means (147, 147');
- said second flow actuator (140) is latchable in its open position and in its closed position by means of the two first latching means (147, 147') and the two second latching means (121).

8. Valve device (100) according to one of the preceding claims, **characterized by** the following features:
- said valve device (100) has a housing lower shell (150) and a housing upper shell (160) which is connectable thereto;
- said housing lower shell (150) comprises bearing shells (151) for rotatably supporting the first flow actuator (130, 130') and the second flow actuator (140); and/or
- said housing upper shell (160) has bearing shells (161) for rotatably supporting the first flow actuator (130, 130') and the second flow actuator (140).

9. Valve device (100) according to one of the preceding claims, **characterized in that** said valve device (100) comprises driving means (170, 171, 172) for driving the first flow actuator (130, 130') in the first rotational direction (D1) and in the second rotational direction (D2).

10. Roof lining system (1) for motor vehicles, comprising:
- at least one air supply connection (10) for connecting the roof lining system (1) to an air conditioning unit of the motor vehicle;
- at least one outflow device (20) fluidly connected to said at least one air supply connection (10),
the roof lining system (1) being **characterized by** the following features:
- said roof lining system (1) comprises at least one valve device (100) according to one of the preceding claims;
- each outflow device (20) comprises a central outflow area (21) and a peripheral outflow area (22_1, 22_2), each comprising at least one separate air supply channel (31, 32_1, 32_2);
- said first air duct (110) of the valve device (100) is fluidly connected to the air supply channel (32_1, 32_2) of the peripheral outflow area (22_1, 22_2);
- said second air duct (120) of the valve device (100) is fluidly connected to the air supply channel (31) of the central outflow area (21); and
- said peripheral outflow area (22_1, 22_2) at least partially surrounds the central outflow area (21).

11. The roof lining system (1) according to claim 10, **characterized by** the following features:
- said roof lining system (1) has a number of heating devices (50) corresponding to the number of outflow devices (20) for heating an air flow to be emitted from the respective outflow device (20);
- each heating device (50) is disposed between the at least one air supply connection (10) and an outflow device (20) associated with the heating device (50); and
- said central outflow area (21) and said peripheral outflow area (22_1, 22_2) of the respective outflow devices (20) are fluidly connected via their respective air supply channels (31, 32_1, 32_2) to the heating device (50) associated with the outflow device (20), the central outflow area (21) and the peripheral outflow area (22_1, 22_2) being downstream of the heating device (50) associated with the outflow device (20).

12. Roof lining system (1) according to claim 11, **characterized in that** the respective flow actuators (130, 130', 140) are arranged downstream of the heating device (50).

13. Roof lining system (1) according to any one of claims 10 to 12, **characterized by** the following features:
- said roof lining system comprises a valve device according to claim 5;
- said peripheral outflow area (22_1, 22_2) of the respective outflow devices (20) comprises at least two peripheral outflow zones (22_1, 22_2), each comprising a separate air supply channel (32_1, 32_2);
- each air supply channel (32_1, 32_2) of the peripheral outflow zones (22_1, 22_2) is fluidly connected to a separate first air duct (110) of the valve device (100); and
- said at least two peripheral outflow zones (22_1, 22_2) together at least partially enclose the central outflow area (21).

14. Motor vehicle with an air-conditioning unit for air-conditioning a passenger compartment of the motor vehicle, the motor vehicle being **characterized in that** the motor vehicle has a roof lining system (1) according to one of claims 10 to 13, the at least one air supply connection (10) of the roof lining system (1) being connected to the air-conditioning unit, so that air provided by the air-conditioning unit can be introduced into the passenger compartment of the motor vehicle via the at least one outflow device (20) of the roof lining system (1).

## Revendications

1. Dispositif de vanne (100) pour système de ciel de toit (1) pour véhicules automobiles, dans lequel le dispositif de vanne (100) est conçu pour commander au moins deux écoulements d'air devant être émis par l'intermédiaire du système de ciel de toit (1) vers un habitacle de véhicule automobile et dans lequel :
- le dispositif de vanne (100) présente un premier canal d'air (110), un second canal d'air (120), un premier actionneur d'écoulement (130, 130') disposé dans le premier canal d'air (110) et un second actionneur d'écoulement (140) disposé dans le second canal d'air (120) ;
- le premier actionneur d'écoulement (130, 130') peut être entraîné dans un premier sens de rotation (D1) et dans un second sens de rotation (D2) et peut être tourné autour d'un axe (L) du premier actionneur d'écoulement (130, 130') entre une position ouverte, dans laquelle une traversée du premier canal d'air (110) est permise, et une position fermée, dans laquelle le premier actionneur d'écoulement (130, 130') empêche une traversée du premier canal d'air (110) ;
- le second actionneur d'écoulement (140) peut être tourné par rapport au premier actionneur d'écoulement (130, 130') et peut être tourné autour de l'axe (L) entre une position ouverte, dans laquelle une traversée du second canal d'air (120) est permise, et une position fermée, dans laquelle le second actionneur d'écoulement (140) empêche une traversée du second canal d'air (120) ; et
- le second actionneur d'écoulement (140) peut être entraîné dans le premier sens de rotation (D1) et/ou dans le second sens de rotation (D2) au moyen du premier actionneur d'écoulement (130, 130'),
le dispositif de vanne (100) étant **caractérisé par** les caractéristiques suivantes :
- le premier actionneur d'écoulement (130, 130') présente un premier entraîneur (131) et un second entraîneur (132) qui présentent un espacement angulaire l'un par rapport à l'autre par rapport à l'axe (L) ;
- le second actionneur d'écoulement (140) présente une butée (141) comportant une première surface de butée (142) et une seconde surface de butée (143) opposée à celle-ci ;
- le premier entraîneur (131) peut être amené en contact avec la première surface de butée (142), de sorte que lorsque le premier actionneur d'écoulement (130, 130') tourne dans le premier sens de rotation (D1), le second actionneur d'écoulement (140) soit entraîné dans le premier sens de rotation (D1) au moyen du premier actionneur d'écoulement (130, 130') ; et
- le second entraîneur (132) peut être amené en contact avec la seconde surface de butée (143), de sorte que lorsque le premier actionneur d'écoulement (130, 130') tourne dans le second sens de rotation (D2), le second actionneur d'écoulement (140) soit entraîné dans le second sens de rotation (D2) au moyen du premier actionneur d'écoulement (130, 130').

2. Dispositif de vanne (100) selon la revendication 1, **caractérisé par** les caractéristiques suivantes :
- le premier actionneur d'écoulement (130, 130') présente un arbre d'entraînement (133) au moyen duquel le premier actionneur d'écoulement (130, 130') peut être tourné dans le premier sens de rotation (D1) et dans le second sens de rotation (D2) ;
- le second actionneur d'écoulement (140) présente un évidement longitudinal (144) ; et
- l'arbre d'entraînement (133) est monté rotatif dans l'évidement longitudinal (144), de sorte que le premier actionneur d'écoulement (130, 130') puisse être tourné par rapport au second actionneur d'écoulement (140).

3. Dispositif de vanne (100) selon la revendication 2, **caractérisé en ce que** la butée (141) fait saillie radialement depuis l'évidement longitudinal (144).

4. Dispositif de vanne (100) selon l'une quelconque des revendications 2 ou 3, **caractérisé par** les caractéristiques suivantes :
- le second actionneur d'écoulement (140) présente une rainure annulaire (145) qui entoure au moins partiellement une ouverture d'accès (146) de l'évidement longitudinal (144) ;
- la butée (141) est disposée à l'intérieur de la rainure annulaire (145) ; et
- le premier entraîneur (131) et le second entraîneur (132) font saillie dans la rainure annulaire (145).

5. Dispositif de vanne (100) selon l'une quelconque des revendications précédentes, **caractérisé par** les caractéristiques suivantes :
- le dispositif de vanne (100) présente au moins deux premiers canaux d'air (110), dans lesquels respectivement un premier actionneur d'écoulement (130, 130') est disposé ;
- les premiers actionneurs d'écoulement (130, 130') respectifs sont couplés à force, de sorte que les premiers actionneurs d'écoulement (130, 130') respectifs présentent des positions angulaires identiques dans les premiers canaux d'air (110) respectifs ; et
- le second canal d'air (120) est disposé entre les deux premiers canaux d'air (110).

6. Dispositif de vanne (100) selon la revendication 5, **caractérisé en ce que** les deux premiers actionneurs d'écoulement (130, 130') sont couplés à force l'un à l'autre au moyen d'une liaison par complémentarité de forme, de préférence au moyen d'une liaison à douille et à broche.

7. Dispositif de vanne (100) selon l'une quelconque des revendications précédentes, **caractérisé par** les caractéristiques suivantes :
- le second actionneur d'écoulement (140) présente deux premiers appareils d'encliquetage (147, 147') qui présentent un espacement angulaire l'un par rapport à l'autre par rapport à l'axe (L) du second actionneur d'écoulement (140) ;
- le dispositif de vanne (100) présente un second appareil d'encliquetage (121) qui peut être respectivement amené en prise avec l'un des premiers appareils d'encliquetage (147, 147') ;
- le second actionneur d'écoulement (140) peut être encliqueté dans sa position ouverte et dans sa position fermée au moyen des deux premiers appareils d'encliquetage (147, 147') et du second appareil d'encliquetage (121).

8. Dispositif de vanne (100) selon l'une quelconque des revendications précédentes, **caractérisé par** les caractéristiques suivantes :
- le dispositif de vanne (100) présente une coque de boîtier inférieure (150) et une coque de boîtier supérieure (160) qui peut être reliée à celle-ci ;
- la coque de boîtier inférieure (150) présente des coques de support (151) permettant de supporter de manière rotative le premier actionneur d'écoulement (130, 130') et le second actionneur d'écoulement (140) ; et/ou
- la coque de boîtier supérieure (160) présente des coques de support (161) permettant de supporter de manière rotative le premier actionneur d'écoulement (130, 130') et le second actionneur d'écoulement (140).

9. Dispositif de vanne (100) selon l'une quelconque des revendications précédentes, **caractérisé en ce que** le dispositif de vanne (100) présente un appareil d'entraînement (170, 171, 172) permettant d'entraîner le premier actionneur d'écoulement (130, 130') dans le premier sens de rotation (D1) et dans le second sens de rotation (D2).

10. Système de ciel de toit (1) pour véhicules automobiles, comprenant :
- au moins un raccord d'alimentation en air (10) permettant de raccorder le système de ciel de toit (1) à un climatiseur du véhicule automobile ;
- au moins un appareil d'évacuation (20) qui est relié fluidiquement à l'au moins un raccord d'alimentation en air (10),
le système de ciel de toit (1) étant **caractérisé par** les caractéristiques suivantes :
- le système de ciel de toit (1) présente au moins un dispositif de vanne (100) selon l'une quelconque des revendications précédentes ;
- chaque appareil d'évacuation (20) présente une zone d'évacuation centrale (21) et une zone d'évacuation périphérique (22_1, 22_2) qui présentent respectivement au moins un canal d'alimentation en air séparé (31, 32_1, 32_2) ;
- le premier canal d'air (110) du dispositif de vanne (100) est relié fluidiquement au canal d'alimentation en air (32_1, 32_2) de la zone d'évacuation périphérique (22_1, 22_2) ;
- le second canal d'air (120) du dispositif de vanne (100) est relié fluidiquement au canal d'alimentation en air (31) de la zone d'évacuation centrale (21) ; et
- la zone d'évacuation périphérique (22_1, 22_2) entoure au moins partiellement la zone d'évacuation centrale (21).

11. Système de ciel de toit (1) selon la revendication 10, **caractérisé par** les caractéristiques suivantes :
- le système de ciel de toit (1) présente un nombre d'appareils de chauffage (50) correspondant au nombre d'appareils d'évacuation (20) et permettant de chauffer un écoulement d'air devant être émis par l'appareil d'évacuation (20) respectif ;
- chaque appareil de chauffage (50) est disposé entre l'au moins un raccord d'alimentation en air (10) et un appareil d'évacuation (20) associé à l'appareil de chauffage (50) ; et la zone d'évacuation centrale (21) et
- la zone d'évacuation périphérique (22_1, 22_2) des appareils d'évacuation (20) respectifs sont reliées fluidiquement à l'appareil de chauffage (50) associé à l'appareil d'évacuation (20) par l'intermédiaire de leurs canaux d'alimentation en air (31, 32_1, 32_2) respectifs, la zone d'évacuation centrale (21) et la zone d'évacuation périphérique (22_1, 22_2) de l'appareil de chauffage (50) associé à l'appareil d'évacuation (20) étant montées en aval.

12. Système de ciel de toit (1) selon la revendication 11, **caractérisé en ce que** les actionneurs d'écoulement (130, 130', 140) respectifs sont montés en aval de l'appareil de chauffage (50).

13. Système de ciel de toit (1) selon l'une quelconque des revendications 10 à 12, **caractérisé par** les caractéristiques suivantes :
- le système de ciel de toit présente un dispositif de vanne selon la revendication 5 ;
- la zone d'évacuation périphérique (22_1, 22_2) des appareils d'évacuation (20) respectifs présente au moins deux régions d'évacuation périphériques (22_1, 22_2) qui présentent respectivement un canal d'alimentation en air séparé (32_1, 32_2) ;
- chaque canal d'alimentation en air (32_1, 32_2) des régions d'évacuation périphériques (22_1, 22_2) est respectivement relié fluidiquement à un premier canal d'air séparé (110) du dispositif de vanne (100) ; et
- les au moins deux régions d'évacuation périphériques (22_1, 22_2) entourent ensemble au moins partiellement la zone d'évacuation centrale (21).

14. Véhicule automobile comportant un climatiseur permettant de climatiser un habitacle pour les passagers du véhicule automobile, le véhicule automobile étant **caractérisé en ce que** le véhicule automobile présente un système de ciel de toit (1) selon l'une quelconque des revendications 10 à 13, l'au moins un raccord d'alimentation en air (10) du système de ciel de toit (1) étant raccordé au climatiseur, de sorte que de l'air fourni par le climatiseur puisse être introduit dans l'habitacle du véhicule automobile par l'intermédiaire de l'au moins un appareil d'évacuation (20) du système de ciel de toit (1).
